# EUROPÄISCHE PATENTANMELDUNG

(11) **EP 3 415 047 A1**
(43) Veröffentlichungstag der Anmeldung: **19.12.2018**
(21) Anmeldenummer: 18176892.0
(22) Anmeldetag: 11.06.2018
(51) Int. Cl.: A47J 31/00, A47J 31/18

(54) **TEEAUTOMAT MIT TEEANALYSEEINRICHTUNG UND VERFAHREN ZUR AUTOMATISCHEN ZUBEREITUNG EINES TEEGETRÄNKS**

(30) Priorität: 12.06.2017 DE 102017112897
(71) Anmelder: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Sascha, 48607 Ochtrup (DE); ZILS, Jürgen, 51399 Burscheid (DE)
(74) Vertreter: Cohausz & Florack

(57) **Zusammenfassung**

Die Erfindung betrifft einen Teeautomat (2), eingerichtet zur automatischen Zubereitung von Teegetränken in einer Brühkammer (4), wobei der Teeautomat (2) eine Teeanalyseeinrichtung (40) aufweist, die dazu eingerichtet ist, Werte für die Konzentration einer oder mehrerer vorgegebener Substanzen in einer in der Brühkammer (4) enthaltenen Flüssigkeit zu messen, und wobei der Teeautomat (2) eine Steuereinrichtung (10) zur Steuerung des Teeautomaten (2) aufweist, die dazu eingerichtet ist, den Teeautomaten (2) abhängig von den gemessenen Werten für die Konzentration zu steuern. Weiterhin betrifft die Erfindung ein Verfahren zur automatischen Zubereitung eines Teegetränks, bei dem zu Beginn eines Brühvorgangs eine Zutatenportion (24), insbesondere eine Portion Teeblätter, und heißes Wasser in einer Brühkammer (4) in Kontakt gebracht werden, bei dem während des Brühvorgangs Werte für die Konzentration einer oder mehrerer vorgegebener Substanzen in dem in der Brühkammer (4) enthaltenen Wasser gemessen werden und bei dem der Brühvorgang abhängig von den gemessenen Werten gesteuert wird, insbesondere beendet wird, wenn die gemessenen Werte einen vorgegebenen Grenzwert überschreiten.

## Beschreibung

Die Erfindung betrifft einen Teeautomaten, eingerichtet zur automatischen Zubereitung von Teegetränken in einer Brühkammer. Darüber hinaus betrifft die Erfindung ein Verfahren zur automatischen Zubereitung eines Teegetränks.

Während Kaffeeautomaten zum automatischen Zubereiten von Kaffeegetränken seit langem bekannt sind, sind erst in jüngerer Zeit Teeautomaten entwickelt worden, die speziell zur automatischen Zubereitung von Teegetränken vorgesehen sind.

Bei der Zubereitung von Teegetränken in einer Brühkammer werden die Teeblätter in der Brühkammer mit heißem Wasser in Kontakt gebracht und dort für eine vorgegebene Brühzeit belassen, so dass Farb- und Aromastoffe aus den Teeblättern in das Wasser gelangen können, die dadurch zum fertigen Teegetränk werden. Abhängig von der verwendeten Teesorte gelangen unterschiedliche Arten von Substanzen in das Wasser, und dies auch mit unterschiedlichen Raten, die zudem von weiteren Brühparametern wie zum Beispiel der Temperatur des verwendeten Wassers (Brühtemperatur) abhängig sind.

Die Brühparameter wie Brühzeit und Brühtemperatur können bei verschiedenen Teesorten und auch je nach Nutzer stark variieren, um einen vom Nutzer gewünschten Geschmack des Teegetränkes zu treffen.

Bei Teemaschinen aus dem Stand der Technik ist es erforderlich, dass der Nutzer die einzelnen Brühparameter selbst einstellt in der Hoffnung, dadurch die von ihm bevorzugte Zusammensetzung des Teegetränkes zu erhalten. Dies ist einerseits aufwändig für den Nutzer und führt mitunter nicht zu den gewünschten Ergebnissen.

Vor diesem Hintergrund liegt der vorliegenden Erfindung die Aufgabe zugrunde, einen Teeautomaten und ein Verfahren zur automatischen Zubereitung eines Teegetränks zur Verfügung zu stellen, die die Nutzerfreundlichkeit verbessern und mit denen die Beschaffenheit des zubereiteten Teegetränks verbessert, insbesondere zuverlässiger den Bedürfnissen des Nutzers angepasst werden kann.

Diese Aufgabe wird bei einem Teeautomaten, eingerichtet zur automatischen Zubereitung von Teegetränken in einer Brühkammer, erfindungsgemäß dadurch gelöst, dass der Teeautomat eine Teeanalyseeinrichtung aufweist, die dazu eingerichtet ist, Werte für die Konzentration einer oder mehrerer vorgegebener Substanzen in einer in der Brühkammer enthaltenen Flüssigkeit zu messen, und dass der Teeautomat eine Steuereinrichtung zur Steuerung des Teeautomaten aufweist, die dazu eingerichtet ist, den Teeautomaten abhängig von den gemessenen Werten für die Konzentration zu steuern.

Weiterhin wird die oben genannte Aufgabe erfindungsgemäß gelöst durch ein Verfahren zur automatischen Zubereitung eines Teegetränkes, bei dem zu Beginn eines Brühvorgangs eine Zutatenportion, insbesondere eine Portion Teeblätter, und heißes Wasser in einer Brühkammer in Kontakt gebracht werden, bei dem während des Brühvorgangs Werte für die Konzentration einer oder mehrerer vorgegebener Substanzen in dem in der Brühkammer enthaltenen Wasser gemessen werden und bei dem der Brühvorgang abhängig von den gemessenen Werten gesteuert wird, insbesondere beendet wird, wenn die gemessenen Werte einen vorgegebenen Grenzwert überschreiten.

Durch das Vorsehen einer Teeanalyseeinrichtung kann das Teegetränk während des Brühvorgangs analysiert werden, so dass eine Steuerung des Brühvorgangs abhängig von der Zusammensetzung des Teegetränks möglich wird. Auf diese Weise kann insbesondere erreicht werden, dass die Zusammensetzung des fertiggestellten Teegetränks am Ende des Brühvorgangs den Wünschen des Nutzers entspricht. Insbesondere kann auf diese Weise ein Teegetränk zubereitet werden, dass in seiner Zusammensetzung den vom Nutzer beabsichtigten Zwecken (Entspannen, Anregen, Moderieren des Appetits etc.) entspricht.

Der Teeautomat ist zur automatischen Zubereitung von Teegetränken in einer Brühkammer eingerichtet. Zu diesem Zweck weist der Teeautomat insbesondere eine Brühkammer auf sowie eine Steuereinrichtung, die die automatische Zubereitung eines Teegetränks in der Brühkammer steuert. Darüber hinaus weist der Teeautomat noch weitere Komponenten auf, die für die automatische Zubereitung von Teegetränken erforderlich sind. Insbesondere kann der Teeautomat eine oder mehrere der folgenden Komponenten aufweisen: eine Heißwasserversorgung, eine Einfüllöffnung für lose Teeblätter, einen Siebeinsatz und eine Verfahreinrichtung zum Bewegen des Siebeinsatzes in der Brühkammer, eine Ausgabeeinrichtung zur Ausgabe des fertigen Teegetränks aus der Brühkammer.

Der Teeautomat weist eine Teeanalyseeinrichtung auf, die dazu eingerichtet ist, Werte für die Konzentration einer oder mehrerer vorgegebener Substanzen in einer in der Brühkammer enthaltenen Flüssigkeit zu messen. Bei der einen oder den mehreren vorgegebenen Substanzen kann es sich insbesondere um vorgegebene chemische Verbindungen handeln, die in der Flüssigkeit in der Brühkammer vorhanden sein können, wie zum Beispiel typische Teeinhaltsstoffe wie Teein (Koffein), Tannine udgl. Zur Messung von Werten für die Konzentration kann die Teeanalyseeinrichtung beispielsweise ein physikalisches oder chemisches Verfahren verwenden.

Die Steuereinrichtung des Teeautomaten ist zur Steuerung des Teeautomaten abhängig von den gemessenen Werten für die Konzentration eingerichtet. Auf diese Weise kann beispielsweise der Brühvorgang abhängig davon gesteuert werden, ob die Konzentration einer bestimmten Substanz in der Flüssigkeit in der Brühkammer in einem vorgegebenen Bereich liegt oder einen vorgegebenen Grenzwert überschritten hat.

Alternativ oder zusätzlich kann die Steuerung des Teeautomaten abhängig von den gemessenen Werten auch die Ausgabe einer von diesen Werten abhängigen Nutzerinformation über eine Nutzerschnittstelle, beispielsweise durch Anzeige auf einem Bildschirm des Teeautomaten, umfassen. Beispielsweise kann auf einem Bildschirm des Teeautomaten die Konzentration eines bestimmten Stoffs angezeigt werden, oder der Zeitpunkt, wenn eine vorgegebene Konzentration des Stoffs erreicht wurde.

Im Folgenden werden verschiedene Ausführungsformen des Teeautomaten und des Verfahrens beschrieben, wobei die einzelnen Ausführungsformen jeweils für den Teeautomaten als auch für das Verfahren gelten und zudem untereinander kombiniert werden können.

Bei einer Ausführungsform handelt es sich bei der bzw. den vorgegebenen Substanzen um eine oder mehrere der folgenden Verbindungen: Teein bzw. Koffein, ein Bitterstoff, insbesondere Tannine, Katechine, Vitamine, Aminosäuren, Theophylin, L-Theanin, Chlorophyll, Karotinoide, Proteine, Cellulose, Polyphenole, Chinasäure, Theobromin, Theogallin, Flavonole. Bei diesen Substanzen handelt es sich um typische Inhaltsstoffe von Teegetränken, wobei die Konzentration der einzelnen Substanzen die Eigenschaften des Teegetränks, insbesondere dessen geschmacklichen und olfaktorischen Eigenschaften bestimmen. Eine Überwachung einer oder mehrerer der zuvor genannten Substanzen mit der Teeanalyseeinrichtung ermöglicht, die Eigenschaften des Teegetränkes zu überwachen und zu steuern und dadurch die Wünsche des Nutzers besser zu erfüllen.

Bei einer weiteren Ausführungsform umfasst die Teeanalyseeinrichtung ein Infrarotspektrometer. Durch Infrarotspektroskopie lassen sich Werte für die Konzentration verschiedener Inhaltsstoffe optisch bestimmen. Das Infrarotspektrometer ist zu diesem Zweck vorzugsweise dazu eingerichtet, die für die zu analysierenden Substanzen spezifischen Molekülschwingungen zu erfassen. Die Banden der gemessenen Spektren können dann mit in einem Speicher der Steuereinrichtung gespeicherten Referenzwerten bzw. -banden verglichen werden, so dass auf die Konzentration der betreffenden Substanzen in der in der Brühkammer enthaltenen Flüssigkeit geschlossen werden kann. Weiterhin kann aus der zeitlichen Änderung des Integrals der Banden der Anstieg der beobachteten Substanzen ermittelt werden. Aus den Integralen der Banden kann auf die absolute Konzentration der entsprechenden Substanz geschlossen werden.

Zur Verbesserung der Genauigkeit kann beispielsweise eine initiale Kalibrierung, zum Beispiel mittels einer Eichlösung, durchgeführt werden. Alternativ kann die Steuereinrichtung des Teeautomaten dazu eingerichtet sein, eine Kalibrierung der Teeanalyseeinrichtung durchzuführen, bei der der Nutzer aufgefordert wird, eine Eichlösung in die Brühkammer zu geben.

Die Technik und Anwendung der Infrarotspektroskopie, insbesondere der Aufbau von Infrarotspektrometern und die Auswertung von Spektroskopiesignalen, sind aus dem Stand der Technik grundsätzlich bekannt und bedürfen daher an dieser Stelle keiner weiteren Erläuterung.

Bei der weiteren Ausführungsform umfasst die Teeanalyseeinrichtung eine Schwingquarzwaage. Mit einer Schwingquarzwaage können ebenfalls Konzentrationswerte für verschiedene Substanzen in einer Gasphase bestimmt werden, so dass auch solches Messgerät für die Teeanalyseeinrichtung geeignet ist. Die Technik und Anwendung von Schwingquarzwaagen, insbesondere deren Aufbau und die Auswertung gemessener Signale, sind aus dem Stand der Technik grundsätzlich bekannt und bedürfen daher an dieser Stelle keiner weiteren Erläuterung (vgl. z.B. Günter Sauerbrey in Z. Phys. 155, Nr. 2, 1959, S. 206).

Die aus einem Tee austretenden Stoffe bzw. Substanzen sind für einen Tee charakteristisch und sind mittels der Schwingquarzwaage quantitativ und qualitativ bestimmbar. Dazu weist vorzugsweise ein Schwingquarz eine Beschichtung auf, auf der die für den Tee charakteristischen Substanzen in Abhängigkeit ihrer Konzentration im Tee physisorbieren.

Bei einem Brühvorgang steigt vorzugsweise Wasserdampf aus der Brühkammer auf, der an der Schwingquarzwaage vorbeigeführt werden kann. Die in dem Tee enthaltenen bzw. in der in der Brühkammer befindlichen Flüssigkeit enthaltenen Stoffe bzw. Substanzen treten in Abhängigkeit ihres stoffspezifischen Dampfdrucks und/oder durch Mitziehen durch den Wasserdampf aus der Brühkammer aus und physisorbieren auf der Oberfläche des Schwingquarzes. Die Physisorption ist stoffspezifisch und steht in einem Proportionalitätsverhältnis zur Konzentration des physisorbierten Stoffes bzw. der physisorbierten Substanz in der Flüssigkeit in der Brühkammer.

Bei einer weiteren Ausführungsform ist die Teeanalyseeinrichtung zur wiederholten oder kontinuierlichen Messung des Wertes für die Konzentration der vorgegebenen Substanz in der Flüssigkeit eingerichtet. Auf diese Weise kann die Veränderung der Konzentration der vorgegebenen Substanz (oder auch Substanzen) während der Dauer des Brühvorgangs überwacht werden.

Bei einer weiteren Ausführungsform ist die Steuereinrichtung dazu eingerichtet, die gemessenen Werte für die Konzentration der einen oder mehreren vorgegebenen Substanzen auf das Überschreiten eines vorgegebenen Grenzwertes zu überwachen und den Teeautomaten abhängig von dem Ergebnis der Überwachung zu steuern. Insbesondere kann die Steuereinrichtung dazu eingerichtet sein, einen Brühvorgang beim Überschreiten des vorgegebenen Grenzwertes zu beenden. Auf diese Weise kann zum Beispiel der Brühvorgang genau so lange durchgeführt werden, bis der gewünschte Grenzwert für eine bestimmten Substanz bzw. mehrere Substanzen erreicht wurde. Auf diese Weise kann im Teegetränk eine Zielkonzentration für eine bestimmte Substanz genau eingestellt werden. Weiterhin kann auf diese Weise beispielsweise verhindert werden, dass das zubereitete Teegetränk eine Maximalkonzentration bestimmter Bitterstoffe überschreitet und zu bitter wird. Das automatische Beenden des Brühvorgangs bei Überschreiten des Grenzwertes wird vorzugsweise dadurch herbeigeführt, dass die Zutatenportion, insbesondere die Teeblätter, aus der Brühkammer entfernt werden, beispielsweise durch Anheben eines Siebes bzw. Siebeinsatzes.

Bei einer weiteren Ausführungsform weist der Teeautomat eine Teeblatterfassungseinrichtung auf, die dazu eingerichtet ist, an einer in den Teeautomaten eingefüllten Zutatenportion eine optische Messung durchzuführen und anhand der Messung einen Wert für eine Eigenschaft der Zutatenportion, insbesondere die Teesorte, zu bestimmen, und die Steuereinrichtung ist dazu eingerichtet, den Teeautomaten abhängig von dem bestimmten Wert für die Eigenschaft der Zutatenportion zu steuern. Auf diese Weise kann eine Eigenschaft der in den Teeautomaten eingefüllten Zutatenportion bereits vor Beginn des Brühvorgangs analysiert werden, so dass insbesondere der Brühvorgang abhängig von dieser Eigenschaft durchgeführt werden kann.

Die Teeblatterfassungseinrichtung ist zur Durchführung einer optischen Messung an einer in den Teeautomaten eingefüllten Zutatenportion eingerichtet. Zu diesem Zweck umfasst die Teeblatterfassungseinrichtung vorzugsweise eine Kamera, die im Bereich einer Aufnahme für eine Zutatenportion des Teeautomaten positioniert ist, so dass sie Bilddaten von einer in die Aufnahme eingefüllten Zutatenportion erfassen und verarbeiten kann.

Insbesondere kann die Teeblatterfassungseinrichtung dazu eingerichtet sein, aus den erfassten Bilddaten die Farbe, die Form und/oder die Größe der Teeblätter der Zutatenportion zu bestimmen. Durch die Farbe der Teeblätter lässt sich beispielsweise schwarzer Tee von grünem Tee unterscheiden. Verschiedene Grünteesorten weisen zudem typischerweise charakteristisch Bruchgrößen der Teeblätter auf und lassen sich daher durch eine Analyse der Größe der Teeblätter voneinander unterscheiden. Die Bestimmung der Größe und/oder der Form der Teeblätter kann beispielsweise durch eine Bildanalyse der aufgenommenen Bilddaten erfolgen.

Die Bestimmung der Eigenschaft der Zutatenportion erfolgt vorzugsweise durch Vergleich der an den optischen Bilddaten ermittelten Werte für die Farbe, die Größe und/oder die Form der Teeblätter mit Referenzwerten, die zum Beispiel in einem Speicher des Teeautomaten gespeichert sein können.

Zur Bestimmung des Werts für die Eigenschaft der Zutatenportion aus der Messung kann die Teeblatterfassungseinrichtung eine von der Steuereinrichtung separate Berechnungseinrichtung aufweisen. Alternativ kann auch die Steuereinrichtung des Teeautomats die Berechnungseinrichtung der Teeblatterfassungseinrichtung bilden.

Die Steuerung des Teeautomaten abhängig von dem Wert für die Eigenschaft der Zutatenportion kann insbesondere dadurch erfolgen, dass Brühparameter für einen mit der Zutatenportion durchzuführenden Brühvorgang abhängig von der Eigenschaft der Zutatenportion gewählt werden. Stellt die Teeblatterfassungseinrichtung beispielsweise fest, dass grüne bzw. schwarze Teeblätter in den Teeautomaten gefüllt sind, so kann die Steuereinrichtung dazu eingerichtet sein, entsprechende Brühparameter für einen grünen bzw. schwarzen Tee auszuwählen.

Bei einer weiteren Ausführungsform ist die Steuereinrichtung dazu eingerichtet, abhängig von dem Wert für die Eigenschaft der Zutatenportion eine oder mehrere Substanzen auszuwählen, wobei die Teeanalyseeinrichtung zur Bestimmung von Werten für die Konzentration der einen oder mehreren ausgewählten Substanzen eingerichtet ist, und ist die Steuereinrichtung weiter dazu eingerichtet, den Teeautomaten abhängig von den gemessenen Werten für die Konzentration der einen oder mehreren ausgewählten Substanzen zu steuern.

Auf diese Weise können abhängig von der in den Teeautomaten eingefüllten Zutatenportion gezielt bestimmte Substanzen während des Brühvorgangs überwacht werden. Beispielsweise können, wenn die Zutatenportion grüne Teeblätter enthält, für grünen Tee charakteristische Substanzen bzw., wenn die Zutatenportion schwarze Teeblätter enthält, für schwarzen Tee charakteristische Substanzen überwacht werden. Dies ist vorteilhaft, da verschiedene Teesorten wie grüner, weißer oder schwarzer Tee aufgrund der unterschiedlichen Fermentation unterschiedliche Substanzen enthalten.

Die Auswahl der Substanzen kann dadurch erfolgen, dass die Steuereinrichtung der Teeanalyseeinrichtung vorgibt, für welche Substanzen die Teeanalyseeinrichtung Werte für die Konzentration bestimmen soll. Alternativ kann die Teeanalyseeinrichtung Werte für die Konzentrationen verschiedener Substanzen bestimmen, aus denen die Steuereinrichtung die Werte für bestimmte Subtanzen auswählt.

Bei einer weiteren Ausführungsform ist die Steuereinrichtung dazu eingerichtet, abhängig von dem Wert für die Eigenschaft der Zutatenportion, insbesondere der Teesorte, einen Grenzwert zu bestimmen, die gemessenen Werte für die Konzentration der einen oder mehreren vorgegebenen Substanzen auf das Überschreiten des bestimmten Grenzwertes zu überwachen und den Teeautomaten abhängig vom Ergebnis der Überwachung zu steuern, insbesondere einen Brühvorgang bei Überschreiten des Grenzwertes zu beenden. Es wurde festgestellt, dass die im Teegetränk zu erzielenden Grenzwerte bestimmter Substanzen je nach zubereiteter Teesorte unterschiedlich sein können. Durch die vorliegende Ausführungsform kann der betreffende Grenzwert abhängig von den Eigenschaften der Zutatenportion, insbesondere abhängig von der Teesorte der in den Teeautomaten gefüllten Zutatentportion eingestellt werden, so dass der Brühvorgang entsprechend der jeweiligen Teesorte durchgeführt werden kann.

Bei einer weiteren Ausführungsform ist die Steuereinrichtung dazu eingerichtet, den bestimmten Wert für die eine Eigenschaft der Zutatenportion, insbesondere die Teesorte, anhand von der Teeanalyseeinrichtung gemessener Werte zu verifizieren oder zu präzisieren. Da verschiedene Teesorten charakteristische Substanzen enthalten, kann der von der Teeerfassungseinrichtung bestimmte Wert für die Eigenschaft der Zutatenportion anhand der von der Teeanalyseeinrichtung während des Brühvorgangs festgestellten Konzentrationen überprüft und ggf. geändert werden. Weiterhin lassen sich durch die Konzentrationen bestimmter Substanzen z.B. bestimmte Teesorten voneinander unterscheiden, die sich durch eine optische Messung schlecht voneinander unterscheiden lassen. Stellt die Steuereinrichtung fest, dass die von der Teeanalyseeinrichtung gemessenen Konzentrationswerte nicht zu dem von der Teeerfassungseinrichtung bestimmten Wert für die Eigenschaft der Zutatenportion passen, kann die Steuereinrichtung eine Fehlermeldung ausgeben und/oder die Brühparameter anpassen.

Bei einer weiteren Ausführungsform ist die Steuereinrichtung dazu eingerichtet, die Durchführung mehrere aufeinanderfolgender Brühvorgänge mit derselben Zutatenportion zu veranlassen und die einzelnen Brühvorgänge derart zu steuern, dass die Werte für die Konzentrationen der einen oder mehreren vorgegebenen Substanzen am Ende der einzelnen Brühvorgänge in einem vorgegebenen Bereich liegen.

Manche Nutzer bevorzugen es, mit derselben Zutatenportion mehrere Brühvorgänge (Aufgüsse) durchzuführen. Da die Zutatenportion während eines Brühvorgangs ausgelaugt werden, verändert sich bei ansonsten gleichbleibenden Brühparametern jedoch die Zusammensetzung der zubereiteten Teegetränke von Brühvorgang zu Brühvorgang. Die vorliegend beschriebene Ausführungsform erlaubt es, die Beschaffenheit des Teegetränks auch über mehrere Brühvorgänge konstant zu halten, indem die einzelnen Brühvorgänge über die von der Teeanalyseeinrichtung gemessenen Werte geregelt werden.

Bei einer weiteren Ausführungsform ist die Steuereinrichtung dazu eingerichtet, den Teeautomaten in einem Lernbetrieb und in einem Anwendungsbetrieb zu betreiben, wobei die Steuereinrichtung bei der Durchführung von Brühvorgängen im Lernbetrieb Werte von Brühparametern, insbesondere der Wassertemperatur zu Beginn und am Ende des Brühvorgangs oder beim Auslassen des Teegetränkes aus der Brühkammer und/oder der Brühzeit speichert und, wobei die Steuereinrichtung bei der Durchführung von Brühvorgängen im Anwendungsbetrieb Brühparameter abhängig von während des Lernbetriebs gespeicherten Werten für die Brühparameter regelt.

Beispielsweise kann der Lernbetrieb bei erstmaliger Inbetriebnahme des Teeautomaten für eine vorgegebene Zeit oder eine vorgegebene Anzahl an Brühvorgängen aufrechterhalten werden, bevor der Teeautomat in den Anwendungsbetrieb wechselt. Während des Lernbetriebs speichert der Teeautomat vom Nutzer gewählte Werte von Brühparametern und lernt auf diese Weise das nutzerspezifische Trinkverhalten kennen. Im Anwendungsbetrieb kann der Teeautomat dann abhängig von diesem Trinkverhalten automatisch die Brühparameter so einstellen, dass die Teebeschaffenheit den Wünschen des Nutzers entspricht. Auf diese Weise ist es nicht erforderlich, dass der Nutzer die Brühparameter bei jedem Brühvorgang selbst auswählt, sondern der Teeautomat ermittelt sie anhand des Nutzerverhaltens selbst.

Bei einer weiteren Ausführungsform ist die Steuereinrichtung dazu eingerichtet, den Teeautomaten nach dem zuvor beschrieben Verfahren zu steuern. Zu diesem Zweck weist die Steuereinrichtung insbesondere einen Mikroprozessor und einen damit verbundenen digitalen Speicher auf, auf dem Befehle gespeichert sind, deren Ausführung auf dem Mikroprozessor die Durchführung des Verfahrens bewirkt.

Weitere Merkmale und Vorteile des Teeautomaten und des Verfahrens ergeben sich aus der nachfolgenden Beschreibung mehrerer Ausführungsbeispiele, wobei auf die beigefügte Zeichnung Bezug genommen wird. In der Zeichnung zeigen
- Fig. 1a-b: ein erstes Ausführungsbeispiel eines erfindungsgemäßen Teeautomaten,

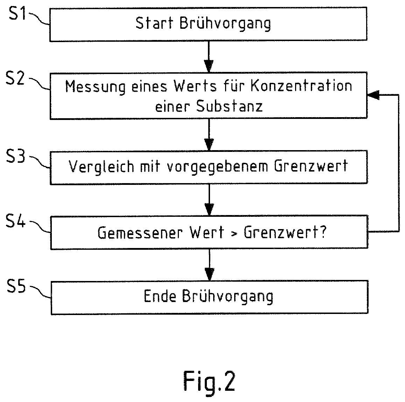

- Fig. 2: ein erstes Ausführungsbeispiel des erfindungsgemäßen Verfahrens,
- Fig. 3: ein zweites Ausführungsbeispiel des erfindungsgemäßen Verfahrens,
- Fig. 4: ein Diagramm mit der Brühzeit abhängig von der Aufgussnummer entsprechend einem weiteren Ausführungsbeispiel des erfindungsgemäßen Verfahrens, und
- Fig. 5: ein Diagramm mit Brühparametern verschiedener Brühvorgänge entsprechend einem weiteren Ausführungsbeispiel des erfindungsgemäßen Verfahrens zur automatischen Zubereitung eines Teegetränks.

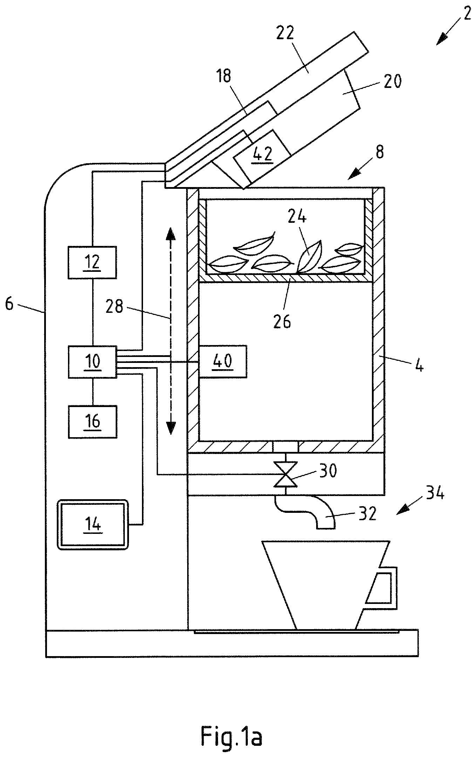

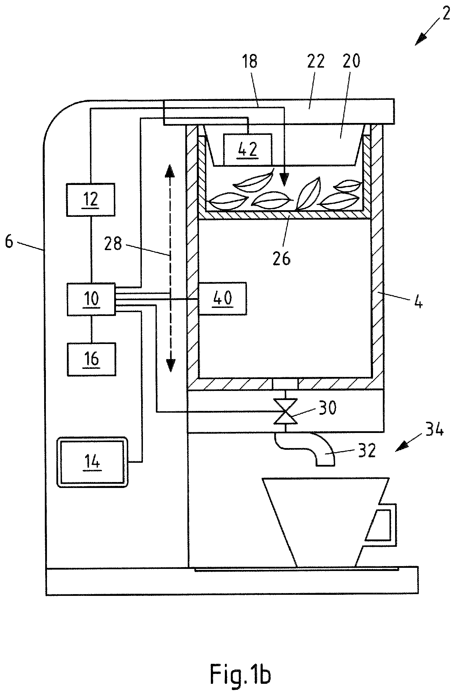

Die Figuren 1a-b zeigen ein Ausführungsbeispiel eines Teeautomaten. Der Teeautomat 2 ist zur automatischen Zubereitung von Teegetränken in einer Brühkammer 4 eingerichtet. Zu diesem Zweck weist der Teeautomat ein Gehäuse 6 mit einer Brühkammeraufnahme 8 auf, in die die Brühkammer 4 einsetzbar ist. Der Teeautomat 2 weist also eine entnehmbare Brühkammer 4 auf. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat eine Steuereinrichtung 10, eine Heißwasserversorgung 12 und eine Nutzerschnittstelle 14 in Form eines Touchscreens auf.

Die Steuereinrichtung 10 ist zur Steuerung des Teeautomaten eingerichtet. Zu diesem Zweck ist auf einem mit der Steuereinrichtung 10 verbundenen Speicher 16 ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Brühvorgang abgeschlossen ist, oder Nutzereingaben empfangen, beispielsweise einen Nutzerbefehl zur Durchführung eines Brühvorgangs.

Um mit dem Teeautomaten 2 ein Teegetränkes zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, in einen Siebeinsatz 26 geben, der in die Brühkammer 4 eingesetzt wird. Anschließend wird der Deckel 22 wieder geschlossen und der Nutzer kann durch eine entsprechende Eingabe über die Nutzerschnittstelle 14 einen Brühvorgang starten.

Auf den Befehl des Nutzers steuert die Steuereinrichtung 10 dann die Heißwasserversorgung 12 an, so dass eine vorgegebene Menge Wasser mit einer vorgegebenen Temperatur in die Brühkammer 4 eingeleitet wird. Weiterhin wird das Sieb 26 durch eine von der Steuereinrichtung 10 angesteuerte, beispielsweise magnetisch mit dem Sieb 26 gekoppelte Verfahreinrichtung 28 in die Brühkammer hinabgefahren, so dass die Teeblätter 24 dort mit dem eingeleiteten heißen Wasser in Kontakt kommen.

Nach Ablauf einer vorgegebenen Brühdauer steuert die Steuereinrichtung 10 die Verfahreinrichtung 28 an, so dass diese das Sieb 26 und damit die Teeblätter 24 wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden.

Bei herkömmlichen Teemaschinen wählt der Nutzer die Brühparameter für den Brühvorgang wie zum Beispiel die Brühtemperatur oder die Brühzeit manuell über die Nutzerschnittstelle 14 aus. Dies ist aufwändig für den Nutzer und zudem keine Garantie, dass das zubereitete Teegetränk eine vom Nutzer erwartete Beschaffenheit aufweist.

Um die Bedienbarkeit und die Qualität des hergestellten Teegetränks zu verbessern, weist der Teeautomat 2 daher eine Teeanalyseeinrichtung 40 auf, die dazu eingerichtet ist, Werte für die Konzentration einer oder mehrerer vorgegebener Substanzen einer in der Brühkammer 4 enthaltenen Flüssigkeit zu messen. Beispielsweise kann die Teeanalyseeinrichtung 40 dazu eingerichtet sein, einen Wert für die Konzentration von Teein (Koffein) und einen Wert für die Konzentration bestimmter Bitterstoffe, zum Beispiel Tannine, zu bestimmen.

Die Teeanalyseeinrichtung 40 übermittelt die für die Konzentrationen dieser Substanzen bestimmten Werte an die Steuereinrichtung 10 und die Steuereinrichtung 10 steuert den Teeautomaten 2 abhängig von diesen Werten. Beispielsweise kann die Teeanalyseeinrichtung 40 während eines Brühvorgangs kontinuierlich oder in bestimmten Zeitabständen Werte für die Tannin-Konzentration der in der Brühkammer 4 enthaltenen Flüssigkeit bestimmen und die Steuereinrichtung 10 kann den Brühvorgang beenden, sobald die Tannin-Konzentration einen vorgegebenen Grenzwert überschreitet. Auf diese Weise kann verhindert werden, dass der Geschmack des Teegetränks durch eine zu lange Brühzeit zu bitter wird.

Der Teeautomat 2 umfasst darüber hinaus eine Teeblatterfassungseinrichtung 42 mit einer Kamera, die Bilddaten einer in das Sieb 26 eingefüllten Zutatenportion, in Fig. 1a der eingefüllten Teeblätter 24, erfassen kann. Die von den Teeblättern 24 erfassten Bilddaten werden von der Steuereinrichtung 10 mittels bildverarbeitungstechnischer Verfahren analysiert, wobei insbesondere ein Wert für die Farbe der Teeblätter, ein Wert für deren Form und/oder für deren Größe (zum Beispiel mittels Konturerkennung) bestimmt wird. Durch einen Vergleich dieser Werte mit im Speicher 16 hinterlegten Referenzwerten kann die Steuereinrichtung 10 auf eine Eigenschaft, insbesondere auf die Teesorte der Teeblätter 24, schließen. Weisen die Teeblätter 24 beispielsweise eine grüne Farbe auf, so kann auf die Teesorte "grüner Tee" geschlossen werden; bei einer schwarzen Farbe kann entsprechend auf die Teesorte "schwarzer Tee" geschlossen werden. Weiterhin lassen sich verschiedene Sorten grüner Tees anhand der Blattgröße voneinander unterscheiden.

Die Steuereinrichtung 10 kann dann anhand der ermittelten Werte für die Eigenschaft der Teeblätter 24, insbesondere die Teesorte, die Brühparameter für einen Brühvorgang festlegen, insbesondere die Brühtemperatur und/oder die Brühdauer. Weiterhin kann die Steuereinrichtung 10 bestimmte Substanzen auswählen, deren von der Teeanalyseeinrichtung 40 bestimmte Konzentrationswerte während des Brühvorgangs auf das Überschreiten eines für die erkannte Teesorte ausgewählten Grenzwerts überwacht werden sollen, zum Beispiel um den Brühvorgang beim Überschreiten der Grenzwerte automatisch zu beenden.

Wird über die Teeblatterfassungseinrichtung 42 festgestellt, dass die Zutatentportion weißen und grünen Tee enthält, so werden während der Zubereitung eines Teegetränks vorzugsweise eine oder mehrere der folgenden Substanzen überwacht, die in weißem und grünem Tee enthalten sind: L-Theanin, Chlorophyll, Karotinoide, Proteine, Zellulose, Polyphenole, Chinasäure, Theobromin, Theogallin und Flavonole. Insbesondere hat sich herausgestellt, dass aufgrund der geringen Fermentation von weißem und grünem Tee im Gegensatz zum schwarzen Tee einige der zuvor genannten Inhaltsstoffe derart erhalten bleiben, dass eine Steuerung des Brühvorgangs anhand der zuvor genannten Substanzen möglich ist. Zudem kann aus der Detektion einer der vorgenannten Substanzen auch auf das Vorliegen einer bestimmten Teesorte geschlossen werden, so dass sich die von der

Teeblatterfassungseinrichtung 42 identifizierte Teesorte durch die von der Teeanalyseeinrichtung 40 ermittelten Werte verifizieren oder weiter präzisieren lässt.

Schwarzer Tee, der einen hohen Fermentationsgrad aufweist, enthält im Wesentlichen wenig oxidationsempfindliche Substanzen wie zum Beispiel Katechine, Vitamine oder Aminosäuren, aber auch Tannine und Theophylin. Daher werden während der Zubereitung eines Teegetränks vorzugsweise eine oder mehrere dieser Substanzen überwacht, wenn über die Teeblatterfassungseinrichtung 42 festgestellt wird, dass die Zutatenportion 24 schwarzen Tee enthält.

In allen Teesorten sind typischerweise Koffein bzw. Teein und Katechine enthalten, so dass Koffein und/oder Katechine auch unabhängig von der erkannten Teesorte überwacht werden können. Für diese Substanzen vorgegebene Grenzwerte werden jedoch vorzugsweise abhängig von der erkannten Teesorte ausgewählt.

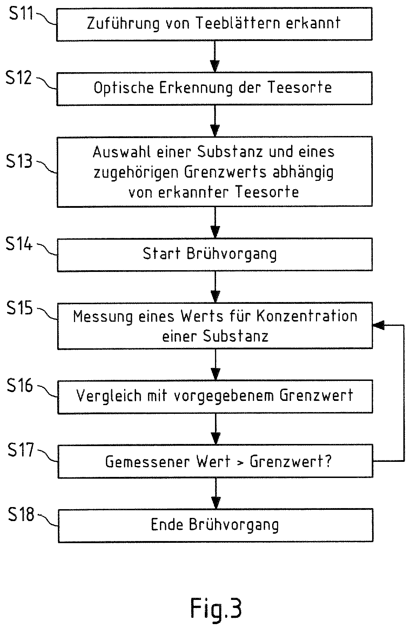

Figur 3 zeigt ein erstes Ausführungsbeispiel des erfindungsgemäßen Verfahrens zur automatischen Zubereitung eines Teegetränks. Insbesondere kann die Steuereinrichtung 10 dazu eingerichtet sein, den Teeautomaten 2 entsprechend des in Figur 3 dargestellten Verfahrens zu steuern.

Im ersten Schritt S1 empfängt die Steuereinrichtung 10 über die Nutzerschnittstelle 14 eine Nutzereingabe des Nutzers, dass ein Brühvorgang gestartet werden soll. Die Steuereinrichtung 10 bestimmt sodann die Brühparameter für den Brühvorgang wie Wassermenge, Brühtemperatur und Brühdauer aus einer Eingabe des Nutzers über die Nutzerschnittstelle 14 oder durch Auslesen der Brühparameter aus dem Speicher 16. Anschließend steuert die Steuereinrichtung die Heißwasserversorgung 12 an, so dass die bestimmte Wassermenge mit der bestimmten Brühtemperatur über die Zuleitung 18 in die Brühkammer eingeleitet wird. Weiterhin wird die Verfahreinrichtung 28 angesteuert, so dass das Sieb 26 mit den zuvor vom Nutzer in den Teeautomaten 2 eingefüllten Teeblättern 24 in die Brühkammer 4 hinabgefahren wird, so dass der Brühvorgang beginnt.

Während des Brühvorgangs wird die Konzentration einer oder mehrere Substanzen, wie zum Beispiel Koffein und/oder Bitterstoffe, in dem in der Brühkammer 4 befindlichen Wasser überwacht. Hierzu ermittelt die Teeanalyseeinrichtung 40 in Schritt S2 Werte für die Konzentrationen der einen oder mehreren Substanzen und übermittelt diese an die Steuereinrichtung 10, in der die Werte in Schritt S3 mit einem vorgegebenen Grenzwert für die jeweilige Substanz verglichen werden. Bei dem Grenzwert kann es sich um einen fest vorgegebenen Grenzwert handeln, um einen vom Nutzer für den Brühvorgang über die Nutzerschnittstelle 14 ausgewählten Grenzwert oder auch um einen Grenzwert, der automatisch von der Steuereinrichtung 10 aus dem Speicher 16 gelesen wird.

In Schritt S4 erfolgt abhängig vom Ergebnis des Vergleichs entweder ein Fortschreiten zum Schritt S5, wenn der gemessene Wert für die Konzentration einer vorgegebenen Substanz den zugehörigen Grenzwert überschreitet, oder andernfalls ein Rücksprung zum Schritt S2.

In Schritt S5 wird der Brühvorgang beendet. Zu diesem Zweck bewirkt die Steuereinrichtung 10, dass die Verfahreinrichtung 28 das Sieb 27 nach oben verfährt, so dass die Teeblätter 24 aus dem nunmehr fertig zubereiteten Teegetränk entfernt werden.

Weiterhin kann die Steuereinrichtung 10, automatisch oder auf entsprechende Anforderung durch den Nutzer über die Nutzerschnittstelle, das Ventil 30 ansteuern, so dass das fertige Teegetränk aus der Brühkammer 4 in eine entsprechende Teeaufnahme 34 geleitet wird.

Durch das Überwachen der Konzentration der vorgegebenen Substanzen, insbesondere Koffein oder Bitterstoffe, während des Brühvorgangs und die Beendigung des Brühvorgangs bei Erreichen eines vorgegebenen Konzentrations-Grenzwerts ist es möglich, die Eigenschaften des zubereiteten Teegetränks entsprechend den Wünschen des Nutzers einzustellen.

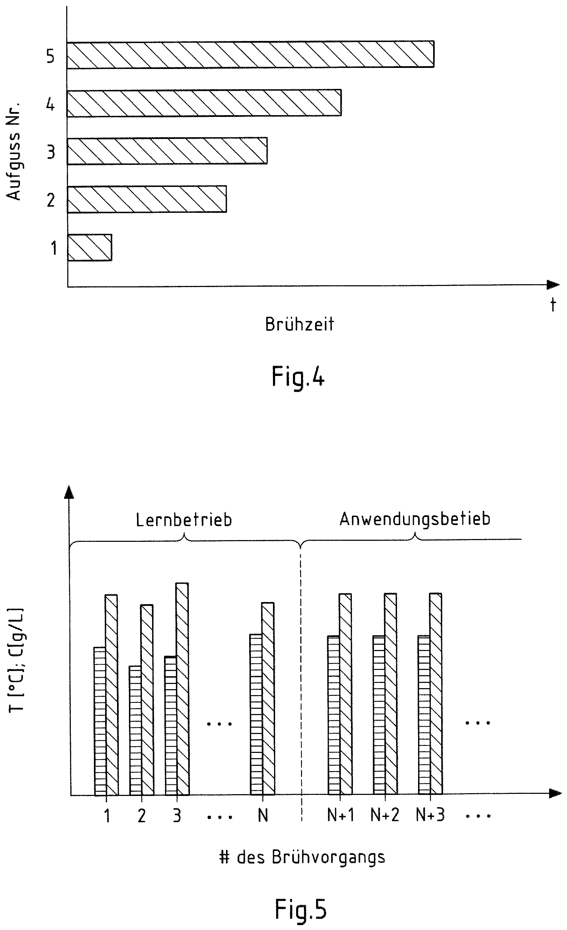

Figur 4 zeigt ein Ablaufdiagramm eines zweiten Ausführungsbeispiels des Verfahrens. Das Verfahren beginnt mit Schritt S11, wenn die Steuereinrichtung 10 über die Nutzerschnittstelle 14 eine entsprechende Eingabe des Nutzers empfängt. Alternativ kann auch ein Schließen des Deckels 22 den Beginn des Verfahrens auslösen.

Im Schritt S12 werden mit der Teeblatterfassungseinrichtung 42 Bilddaten aufgenommen und es wird analysiert, ob sich im Sieb 26 Teeblätter befinden. Ist dies nicht der Fall, kann die Steuereinrichtung 10 beispielsweise eine entsprechende Warnung über die Nutzerschnittstelle 14 ausgeben.

Wurden in Schritt S12 Teeblätter erkannt, so erfolgt im nachfolgenden Schritt S13 eine optische Erkennung der Teesorte, indem aus den erfassten Bilddaten die Farbe, die Form und/oder die Größe der Teeblätter 24 bestimmt werden und durch Vergleich mit im Speicher 16 hinterlegten Referenzwerten ausgewertet wird, um welche Teesorte es sich bei den Teeblättern 24 handelt. Zu diesem Zweck können beispielsweise aus einer Menge von Referenzdaten diejenigen Referenzdaten ausgewählt werden, die mit den erfassten Werten am besten übereinstimmen, und die gesuchte Teesorte als die diesen ausgewählten Referenzdaten zugeordnete Teesorte identiziert werden.

Nach der Erkennung der Teesorte wählt die Steuereinrichtung 10 eine während des Brühvorgangs zu überwachende Substanz aus, vorzugsweise abhängig von der zuvor erkannten Teesorte, da in verschiedenen Teesorten verschiedene charakteristische Substanzen enthalten sind. So kann die Steuereinrichtung beispielsweise die Substanzen Koffein und L-Theanin auswählen, wenn die Teesorte "grüner Tee" erkannt wurde, bzw. die Substanzen Koffein und Theophylin auswählen, wenn die Teesorte "schwarzer Tee" erkannt wurde. Weiterhin wählt die Steuereinrichtung für die ausgewählten Substanzen jeweilige Grenzwerte aus, vorzugsweise wiederum abhängig von der erkannten Teesorte.

Im Anschluss daran oder auf eine entsprechende Nutzereingabe über die Nutzerschnittstelle 14 wird dann im Schritt S14 der Brühvorgang gestartet (ähnlich dem Schritt S1 aus Figur 3), wobei die Brühparameter vorzugsweise abhängig von der erkannten Teesorte ausgewählt werden.

Im Schritt S15 werden während des Brühvorgangs Werte für die Konzentration der ausgewählten einen oder mehreren Substanzen durch die Teeanalyseeinrichtung 40 ermittelt und im nachfolgenden Schritt S16 mit dem zugehörigen ausgewählten Grenzwert verglichen. Im Schritt S17 erfolgt dann abhängig vom Ergebnis des Vergleichs, wenn der Grenzwert überschritten wurde, ein Fortschreiten zum Schritt S18, in dem der Brühvorgang durch Herauffahren des Siebs 26 beendet wird, bzw. andernfalls ein Rücksprung zum Schritt S15.

Durch das Erkennen der Teesorte anhand der Teeblatterfassungseinrichtung 42 in Schritt S12 kann der Teeautomat 2 die Brühparameter und die während des Brühvorgangs zu überwachenden Substanzen automatisch auswählen, ohne dass der Nutzer diese über die Nutzerschnittstelle 14 vorgeben muss. Dies erleichtert die Benutzung des Teeautomaten 2. Während des eigentlichen Brühvorgangs erfolgt dann wiederum eine Regelung über die Konzentration der ausgewählten Substanzen, so dass ein Teegetränk in der vom Nutzer erwarteten Qualität zubereitet wird.

Figur 4 zeigt ein Diagramm mit Brühparametern entsprechend eines weiteren Ausführungsbeispiels des Verfahrens. Bei diesem Ausführungsbeispiel erfolgen mehrere Brühvorgänge (Aufgüsse) hintereinander, ohne dass die Teeblätter 24 zwischenzeitlich aus dem Teeautomaten 2 entfernt werden. Es werden also mehrere Aufgüsse mit denselben Teeblättern durchgeführt.

Da die Teeblätter 24 im Wasser auslaugen, würden gleiche Brühparameter bei aufeinanderfolgenden Aufgüssen dazu führen, dass die Beschaffenheit des zubereiteten Teegetränks sich von Aufguss zu Aufguss erheblich verändert, insbesondere verschlechtert.

Der Teeautomat 2 erlaubt jedoch eine Regelung der Brühzeit anhand der Konzentration bestimmter Substanzen im Teegetränk. Damit wird berücksichtigt, dass aufgrund des Auslaugens der Teeblätter der Gehalt der entsprechenden Substanzen in den Teeblättern von Aufguss zu Aufguss geringer wird und sich entsprechend die Brühzeit verlängern muss, um eine gleichbleibende Konzentration der betreffenden Substanzen in den zubereiteten Teegetränken zu erhalten.

Figur 4 zeigt die aus einer solchen Regelung resultierende Brühzeit für nacheinander mit denselben Teeblättern 24 durchgeführte Aufgüsse 1 bis 5 als Balkendiagramm. Wie sich zeigt, verlängert sich die Brühzeit von Aufguss zu Aufguss durch die Regelung, so dass damit im Ergebnis eine gleichbleibende Qualität der zubereiteten Teegetränke erreicht werden kann.

Figur 5 zeigt ein Diagramm mit Brühparameten eines weiteren Ausführungsbeispiels des erfindungsgemäßen Verfahrens. Bei diesem Ausführungsbeispiel des Verfahrens wird der Teeautomat 2 zunächst für N Brühvorgänge in einem Lernbetrieb betrieben und stellt dann ab dem Brühvorgang N+1 auf einen Anwendungsbetrieb um.

Während des Lernbetriebs kann der Nutzer über die Nutzerschnittstelle 14 Parameter für den Brühvorgang, insbesondere die Brühtemperatur T und die Brühzeit t vorgeben. Am Ende eines jeden Brühvorgangs bestimmt die Teeanalyseeinrichtung 40 die mit diesen Parametern erreichte Konzentration einer vorgegebenen Substanz. Die Brühtemperatur und die erreichte Konzentration der vorgegebenen Substanz werden am Ende jedes Brühvorgangs gespeichert. In Figur 6 sind exemplarisch die Brühparameter für die Wassertemperatur T und die Konzentration C von Koffein für die einzelnen Brühvorgänge 1 bis N als Balkendiagramme dargestellt, wobei die horizontal gestreiften Balken die Temperatur T und die schräg gestreiften Balken die Konzentration darstellen.

Nach Ablauf einer vorgegebenen Anzahl von Brühvorgängen N geht der Teeautomat 2 automatisch in den Anwendungsbetrieb über. Alternativ kann der Teeautomat 2 auch nach einer vorgegebenen Zeit, beispielsweise von einem Monat, oder nach entsprechender Aufforderung durch den Nutzer über die Nutzerschnittstelle 14 in den Anwendungsbetrieb übergehen. Beim Übergang in den Anwendungsbetrieb berechnet die Steuereinrichtung 10 aus den gespeicherten Parametern der Brühvorgänge 1 bis N ein Nutzerprofil mit den typischerweise gewünschten Brühparametern, vorliegend zum Beispiel für die Brühtemperatur und die Konzentration einer vorgegebenen Substanz wie zum Beispiel Koffein. Beispielsweise kann die Steuereinrichtung die gewünschten Brühparameter durch Mittelwertbildung ermitteln. Im Anwendungsbetrieb erfolgt die Steuerung des Brühvorgangs dann auf Basis der bestimmten Parameter des Nutzerprofils, so dass ab dem Brühvorgang N+1 das zubereitete Teegetränk entsprechend dieser Vorgaben zubereitet wird und dadurch die vom Nutzer bevorzugte Beschaffenheit aufweist.

Durch das Vorsehen dieser beiden Betriebsarten kann sich der Teeautomat 2 automatisch an die Vorlieben des Nutzers anpassen, ohne dass der Nutzer die von ihm gewünschten Parameter selbst eingeben muss. Dadurch wird die Betriebsweise des Teeautomaten 2 vereinfacht.

## Patentansprüche

1. Teeautomat (2), eingerichtet zur automatischen Zubereitung von Teegetränken in einer Brühkammer (4),
**dadurch gekennzeichnet,**
- **dass** der Teeautomat (2) eine Teeanalyseeinrichtung (40) aufweist, die dazu eingerichtet ist, Werte für die Konzentration einer oder mehrerer vorgegebener Substanzen in einer in der Brühkammer (4) enthaltenen Flüssigkeit zu messen, und
- **dass** der Teeautomat (2) eine Steuereinrichtung (10) zur Steuerung des Teeautomaten (2) aufweist, die dazu eingerichtet ist, den Teeautomaten (2) abhängig von den gemessenen Werten für die Konzentration zu steuern.

2. Teeautomat nach Anspruch 1,
**dadurch gekennzeichnet, dass** es sich bei der bzw. den vorgegebenen Substanzen um einen oder mehrere der folgenden Verbindungen handelt: Teein bzw. Koffein, ein Bitterstoff, insbesondere Tannine, Catechine, Vitamine, Aminosäuren, Theophyllin, L-Theanin, Chlorophyll, Karotinoide, Proteine, Cellulose, Polyphenole, Chinasäure, Theobromin, Theogallin, Flavonole.

3. Teeautomat nach Anspruch 1 oder 2,
**dadurch gekennzeichnet, dass** die Teeanalyseeinrichtung (40) ein Infrarotspektrometer oder eine Schwingquarzwaage umfasst.

4. Teeautomat nach einem der Ansprüche 1 bis 3,
**dadurch gekennzeichnet, dass** die Teeanalyseeinrichtung (40) zur wiederholten oder kontinuierlichen Messung des Werts für die Konzentration der vorgegebenen Substanz in der Flüssigkeit eingerichtet ist.

5. Teeautomat nach einem der Ansprüche 1 bis 4,
**dadurch gekennzeichnet, dass** die Steuereinrichtung (10) dazu eingerichtet ist, die gemessenen Werte für die Konzentration der einen oder mehreren vorgegebenen Substanzen auf das Überschreiten eines vorgegebenen Grenzwerts zu überwachen und den Teeautomaten (2) abhängig vom Ergebnis der Überwachung zu steuern, insbesondere einen Brühvorgang bei Überschreiten des Grenzwerts zu beenden.

6. Teeautomat nach einem der Ansprüche 1 bis 5,
**dadurch gekennzeichnet, dass** der Teeautomat (2) eine Teeblatterfassungseinrichtung (42) aufweist, die dazu eingerichtet ist, an einer in den Teeautomaten (2) eingefüllten Zutatenportion (24) eine optische Messung durchzuführen und anhand der Messung einen Wert für eine Eigenschaft der Zutatenportion (24), insbesondere die Teesorte, zu bestimmen, und dass die Steuereinrichtung (10) dazu eingerichtet ist, den Teeautomaten (2) abhängig von dem Wert für die Eigenschaft der Zutatenportion (24) zu steuern.

7. Teeautomat nach Anspruch 6,
**dadurch gekennzeichnet, dass** die Steuereinrichtung (10) dazu eingerichtet ist, abhängig von dem Wert für die Eigenschaft der Zutatenportion (24) eine oder mehrere Substanzen auszuwählen, wobei die Teeanalyseeinrichtung (40) zur Bestimmung von Werten für die Konzentration der einen oder mehreren ausgewählten Substanzen eingerichtet ist, und dass die Steuereinrichtung (10) weiter dazu eingerichtet ist, den Teeautomaten (2) abhängig von den gemessenen Werten für die Konzentration der einen oder mehreren ausgewählten Substanzen zu steuern.

8. Teeautomat nach Anspruch 6 oder 7,
**dadurch gekennzeichnet, dass** die Steuereinrichtung (10) dazu eingerichtet ist, abhängig von dem Wert für die Eigenschaft der Zutatenportion (24) einen Grenzwert zu bestimmen, die gemessenen Werte für die Konzentration der einen oder mehreren vorgegebenen Substanzen auf das Überschreiten des bestimmten Grenzwerts zu überwachen und den Teeautomaten (2) abhängig vom Ergebnis der Überwachung zu steuern, insbesondere einen Brühvorgang bei Überschreiten des Grenzwerts zu beenden.

9. Teeautomat nach einem der Ansprüche 6 bis 8,
**dadurch gekennzeichnet, dass** die Steuereinrichtung (10) dazu eingerichtet ist, den bestimmten Wert für die eine Eigenschaft der Zutatenportion (24), insbesondere die Teesorte, anhand von der Teeanalyseeinrichtung (40) gemessener Werte zu verifizieren oder zu präzisieren.

10. Teeautomat nach einem der Ansprüche 1 bis 9,
**dadurch gekennzeichnet,**
**dass** die Steuereinrichtung (10) dazu eingerichtet ist, die Durchführung mehrerer aufeinanderfolgender Brühvorgänge mit derselben Zutatenportion (24) zu veranlassen und die einzelnen Brühvorgänge derart zu steuern, dass die Werte für die Konzentration der einen oder mehreren vorgegebenen Substanzen am Ende der einzelnen Brühvorgänge in einem vorgegebenen Bereich liegen.

11. Teeautomat nach einem der Ansprüche 1 bis 10,
**dadurch gekennzeichnet,**
**dass** die Steuereinrichtung (10) dazu eingerichtet ist, den Teeautomaten (2) in einem Lernbetrieb und in einem Anwendungsbetrieb zu betreiben, wobei die Steuereinrichtung (10) bei der Durchführung von Brühvorgängen im Lernbetrieb Werte von Brühparametern, insbesondere der Wassertemperatur zu Beginn oder am Ende des Brühvorgangs oder beim Auslassen des Teegetränks aus der Brühkammer (4) und/oder der Brühzeit, speichert und wobei die Steuereinrichtung (10) bei der Durchführung von Brühvorgängen im Anwendungsbetrieb Brühparameter abhängig von während des Lernbetriebs gespeicherten Werten für Brühparameter regelt.

12. Teeautomat nach einem der Ansprüche 1 bis 11,
**dadurch gekennzeichnet,**
**dass** die Steuereinrichtung (10) dazu eingerichtet ist, den Teeautomaten (2) entsprechend eines Verfahrens gemäß Anspruch 13 zu steuern.

13. Verfahren zur automatischen Zubereitung eines Teegetränks,
- bei dem zu Beginn eines Brühvorgangs eine Zutatenportion (24), insbesondere eine Portion Teeblätter, und heißes Wasser in einer Brühkammer (4) in Kontakt gebracht werden,
- bei dem während des Brühvorgangs Werte für die Konzentration einer oder mehrerer vorgegebener Substanzen in dem in der Brühkammer (4) enthaltenen Wasser gemessen werden und
- bei dem der Brühvorgang abhängig von den gemessenen Werten gesteuert wird, insbesondere beendet wird, wenn die gemessenen Werte einen vorgegebenen Grenzwert überschreiten.
